(19) Europäisches Patentamt
European Patent Office
Office européen des brevets

(11) **EP 3 683 560 B1**

(12) **EUROPEAN PATENT SPECIFICATION**

(45) Date of publication and mention
of the grant of the patent:
**15.06.2022 Bulletin 2022/24**

(21) Application number: **18853116.4**

(22) Date of filing: **03.09.2018**

(51) International Patent Classification (IPC):
***G01L 5/00*** *(2006.01)* ***B60C 23/04*** *(2006.01)*
***B60C 23/06*** *(2006.01)*

(52) Cooperative Patent Classification (CPC):
**G01G 19/08; G01M 17/02;** B60C 2019/004

(86) International application number:
**PCT/JP2018/032526**

(87) International publication number:
**WO 2019/049808 (14.03.2019 Gazette 2019/11)**

(54) **TIRE LOAD ESTIMATION METHOD AND TIRE LOAD ESTIMATION DEVICE**

VERFAHREN ZUR KALKULATION DER REIFENLAST UND VORRICHTUNG ZUR KALKULATION DER REIFENLAST

PROCÉDÉ D'ESTIMATION DE CHARGE DE PNEU ET DISPOSITIF D'ESTIMATION DE CHARGE DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2017 JP 2017174301**

(43) Date of publication of application:
**22.07.2020 Bulletin 2020/30**

(73) Proprietor: **Bridgestone Corporation**
**Tokyo 104-8340 (JP)**

(72) Inventor: **TAKEDOMI, Shogo**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 2 172 759      WO-A1-2007/010895
JP-A- 2010 159 031    JP-A- 2012 218 682
JP-A- 2015 217 713    US-A1- 2011 193 696**

**Description**

TECHNICAL FIELD

The present invention relates to a method and a device for estimating a load acting on a tire by using an output signal of an acceleration sensor disposed on an inner surface side of a tire tread of the tire.

BACKGROUND

Conventionally, there has been proposed a method for estimating a load acting on a tire while a vehicle is running, in which a plurality of piezoelectric elements for detecting a change of the load in a circumferential direction and a plurality of piezoelectric elements for detecting a change of the load in a width direction are disposed respectively on an inner surface side of a tire tread; a ground contact area of the tire is calculated on the basis of a ground contact length in the tire circumferential direction detected from the change of the load in the circumferential direction and a ground contact width in the tire width direction detected from the change of the load in the width direction; an air pressure of the tire is measured; and the load acting on the tire is estimated from the measured air pressure and the calculated ground contact area (see, for example, Patent Document 1). Attention is also drawn to the disclosures of EP2172759A1 and JP2015-217713A.

CITATION DOCUMENT

Patent Document

Patent Document 1: Japanese Unexamined Patent Application Laid-open No. 2012-218682

SUMMARY OF THE INVENTION

Technical Problem

However, there has been a problem that, in the method described in Patent Document 1, because it is configured to detect changes of the load in the circumferential direction and in the width direction, it has been necessary to dispose a plurality of sensors (piezoelectric elements) on an inner surface side of each tire tread. In addition, in Patent Document 1, because the load is estimated using the ground contact area, although the air pressure has been taken into consideration, accuracy of the load estimation has not been sufficient.

The present invention has been made in view of the conventional problem and aims at providing a method and a device capable of precisely estimating a load acting on a tire with less sensors.

Solution to Problem

The present invention provides a method for estimating a load acting on a tire mounted on a vehicle, the method including: a step of detecting an acceleration waveform in a tire radial direction of each tire from an output of each of acceleration sensors disposed on an inner surface side of a tire tread of each tire of the vehicle; a step of calculating a total vehicle weight; a step of differentiating the acceleration waveform in the tire radial direction of each tire to obtain a differential acceleration waveform; a step of calculating a ground contact time and a rotation time of the tire from the differential acceleration waveform; a step of calculating, for each tire, a ground contact time ratio which is a ratio between the ground contact time and the rotation time; and a step of estimating a load acting on a target tire, which is a target for estimation of the load, from the calculated ground contact time ratio of each tire, a maximum load capability of the target tire, the calculated total vehicle weight, and an inclination obtained in advance by approximating a maximum load capability ratio with a linear function of the ground contact time ratio, in which the maximum load capability ratio of the target tire is a value obtained by normalizing the load acting on the target tire with the maximum load capability of the target tire.

The present invention also provides a device for estimating a load acting on a tire mounted on a vehicle, the device including: acceleration sensors each disposed on an inner surface side of a tire tread of each tire of the vehicle and each being configured to detect an acceleration in a tire radial direction of each tire; a total vehicle weight calculating means that calculates a total vehicle weight; an acceleration waveform extracting means that extracts, for each tire, an acceleration waveform in the tire radial direction including a vicinity of a contact patch from an output signal of each of the acceleration sensors; a differential calculating means that differentiates the acceleration waveform in the tire radial direction to obtain a differential acceleration waveform; a peak position detecting means that detects a peak position on a leading edge side and a peak position on a trailing edge side, the peak positions being peak positions at two ground contact ends appearing in the differential acceleration waveform; a ground contact time calculating means that calculates a ground contact time which is an interval between the peak position on the leading edge side and the peak position on the trailing edge side: a rotation time calculating means that calculates a rotation time, which is a time required for the tire to rotate for one rotation, from an interval between two adjacent peak positions on the leading edge side or two adjacent peak positions on the trailing edge side in the acceleration waveform in the tire radial direction; a ground contact time ratio calculating means that calculates, for each tire, a ground contact time ratio which is a ratio between the ground contact time and the rotation time; and a load estimating means that estimates the load acting on a target tire, which is a target for estimation of the load, from the calculated ground contact time ratio of each tire, a maximum load capability of the target tire, the calculated total vehicle weight, and an inclination obtained in advance by approximating a maximum load capability ratio with a linear function of the ground contact time ratio, in which the maximum load capability ratio of the target tire is a value obtained by normalizing the load acting on the target tire with the maximum load capability of the target tire.

The summary of the invention does not enumerate all the features required for the present invention, and sub-combinations of these features may also become the invention.

BRIEF DESCRIPTION OF THE DRAWINGS

FIG. 1 is a diagram illustrating a configuration of a tire load estimation device according to an embodiment of the present invention;
FIGS. 2(a) and 2(b) are diagrams illustrating an example how acceleration sensors and total vehicle weight calculating means are mounted;
FIGS. 3(a) and 3(b) are diagrams illustrating an example of an acceleration waveform and a differential acceleration waveform, respectively;
FIG. 4 is a diagram illustrating a relationship among the differential acceleration waveform, a ground contact time and a rotation time;
FIG. 5 is a flowchart illustrating a tire load estimation method according to the present embodiment; and
FIG. 6 is a diagram illustrating a relationship between a ground contact time ratio and a load; and
FIG. 7 is a diagram illustrating a relationship between the ground contact time ratio and a maximum load capability ratio.

DESCRIPTION OF EMBODIMENT

Embodiment

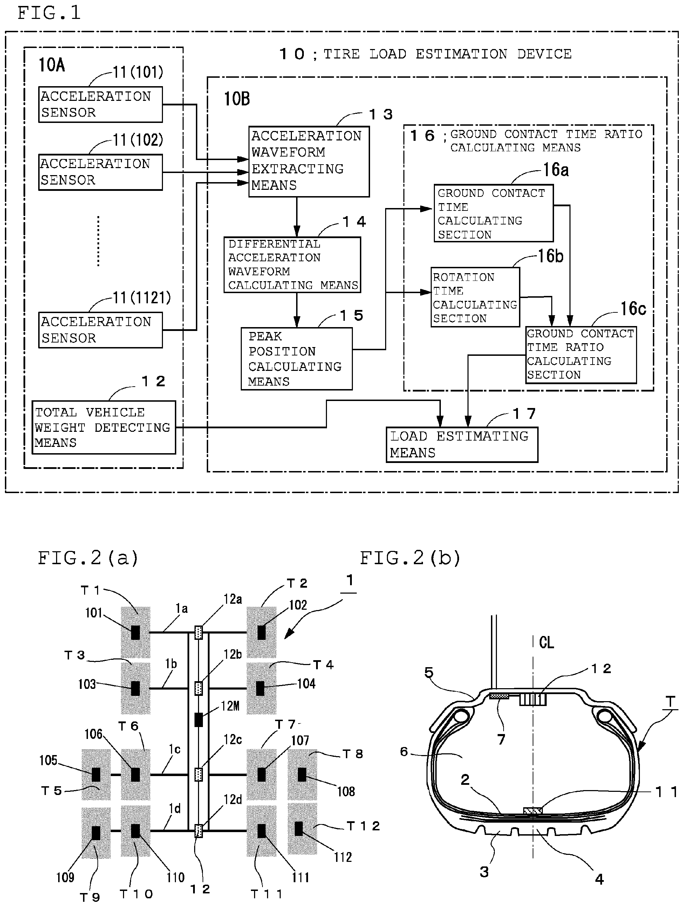

FIG. 1 is a block diagram illustrating a configuration of a tire load estimation device 10 according to an embodiment of the present invention. In FIG. 1, 11 (101~112) denotes acceleration sensors, 12 denotes a total vehicle weight calculating means, 13 denotes an acceleration waveform extracting means, 14, denotes a differential acceleration waveform calculating means, 15 denotes a peak position calculating means, 16 denotes a ground contact time ratio calculating means and 17 denotes a load estimating means.

The acceleration sensors 101~112 and the total vehicle weight calculating means 12 constitute a sensor unit 10A, and the respective means from the acceleration waveform extracting means 13 to the load estimating means 17 constitute a calculating unit 10B.

The acceleration waveform extracting means 13 to the load estimating means 17 are each configured, for example, by computer software and a storage device such as a random access memory (RAM), and disposed on a not-shown vehicle body side.

In the present embodiment, an explanation is given as to a case where the number n of tires to be mounted on the vehicle is 12, as illustrated in FIG. 2(a).

The acceleration sensor 11 is, as illustrated in FIGS. 2(a) and 2(b), disposed on an inner liner portion 2 of each of tires T (T1~T12) of a vehicle 1 at a central portion in the tire width direction indicated by CL in a manner so that a detection direction becomes a tire radial direction, to thereby detect acceleration in the tire radial direction acting on an inner surface of a center portion 4 of a tire tread 3.

As the total vehicle weight calculating means 12, a well-known total vehicle weight calculating means may be used. Namely, such as for example, a total vehicle weight calculating means including weigh detecting units 12a~12d disposed on axles 1a~1d and a total vehicle weight calculating unit 12M that calculates a total weight of the vehicle 1 on the basis of outputs of the weigh detecting units 12a~12d.

Incidentally, in the present embodiment, four (4) of front side tires T1~T4 are driven wheels, and eight (8) of rear side tires T5~T12 are driving wheels.

The acceleration waveform extracting means 13 extracts, for each tire Tk (k = 1~12), an acceleration waveform in the tire radial direction (hereinafter referred to "acceleration waveform"), which is a time-series waveform of acceleration in the tire radial direction, from an acceleration signal in the tire radial direction output from each of the acceleration sensors 101~112.

The differential acceleration waveform calculating means 14 time-differentiates the acceleration waveform extracted by the acceleration waveform extracting means 13 to obtain a differential acceleration waveform.

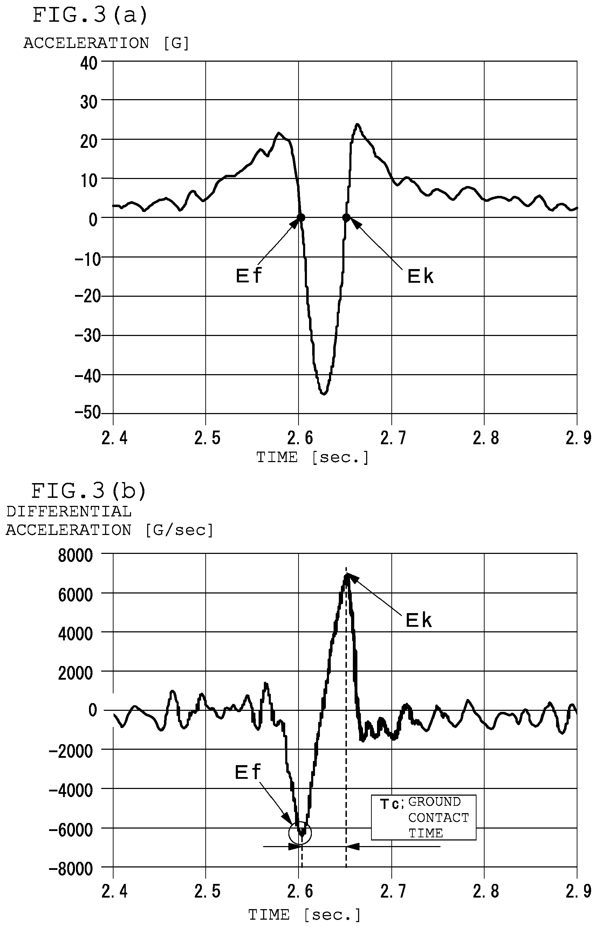

FIG. 3(a) illustrates an example of the acceleration waveform in the tire radial direction detected by the acceleration sensor 11, in which the horizontal axis represents time [sec.] and the vertical axis represents magnitude [G] of acceleration. In the acceleration waveform, the magnitude of the acceleration becomes zero (0) at two ground contact ends, which are a ground contact end on the leading side (hereinafter referred to "leading edge $E_f$) shown by a black circle on the left side in FIG. 3(a) and a ground contact end on the trailing side (hereinafter referred to "trailing edge $E_k$) shown by a black circle on the right side in FIG. 3(a).

FIG. 3(b) illustrates a differential acceleration waveform obtained by differentiating the acceleration waveform illustrated in FIG. 3(a), in which the horizontal axis represents time [sec.] and the vertical axis represents magnitude [G/sec.] of differential acceleration. As illustrated in FIG. 3(b), in the differential acceleration waveform, large peaks appear at the leading edge $E_f$ and the trailing edge $E_k$.

The ground contact time $T_c$ of the tire is a time interval between a position of the leading edge $E_f$ and a position of the trailing edge $E_k$, which are zero-cross points of the acceleration waveform. However, it is difficult to precisely calculate an interval between the zero-cross points, hence in the present embodiment, a time interval between the peak position on the leading side and the peak position on the trailing side, which are two peak positions in the differential acceleration waveform, is defined as the ground contact time $T_c$.

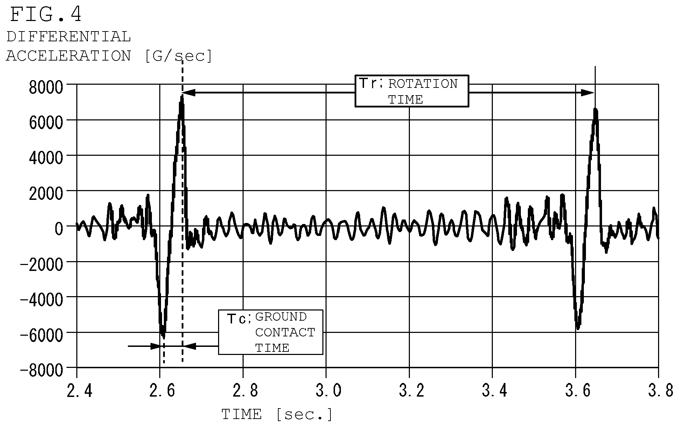

In the meantime, in the present embodiment, as illustrated in FIG. 4, since a rotation time Tr is also calculated in addition to the ground contact time $T_c$, it is desirable to obtain a differential acceleration waveform for at least two rotations of the tire (in reality, it is sufficient to detect at least two peak positions on the leading side or at lest two peak positions on the trailing side).

The ground contact time ratio calculating means 16 includes a ground contact time calculating section 16a, a rotation time calculating section 16b and a ground contact time ratio calculating section 16c, and calculates a ground contact time ratio CTRk = $T_{ck}$ / $T_{rk}$ of each tire Tk

More specifically, the ground contact time calculating section 16a calculates the time interval between the peak position on the leading side and the peak position on the trailing side that appear in the differential acceleration waveform illustrated in FIG. 4, and sends the calculated time interval to the ground contact time ratio calculating section 16c as the ground contact time $T_{ck}$.

The rotation time calculating section 16b calculates the time interval between temporally-adjacent two peaks on the leading side or the time interval between temporally-adjacent two peaks on the trailing side, and sends the calculated time interval to the ground contact time ratio calculating section 16c as the rotation time $T_{rk}$.

The ground contact time ratio calculating section 16c calculates the ground contact time ratio CTRk = $T_{ck}$ / $T_{rk}$ by using the calculated ground contact time $T_{ck}$ and the calculated rotation time $T_{rk}$, and sends the calculated ground contact time ratio to the load estimating means 17.

The ground contact time $T_{ck}$, the rotation time $T_{rk}$ and the ground contact time ratio CTRk are calculated for each tire Tk.

The load estimating means 17 estimates a load $w_k$ acting on the tire Tk by using the following formulae (1) and (2) from the ground contact time ratio CTRk of each tire Tk calculated by the ground contact time ratio calculating means 16, a maximum load capability M of the target tire (tire Tk) which is a target for estimation of the load $w_k$, the total vehicle weight W calculated by the total vehicle weight calculating means 12, and a change rate a, which has been obtained in advance, of a maximum load capability ratio $M_k$ [%] = $w_k$ / M to the ground contact time ratio $CTR_k$.

$$M_k \, [\%] = (w_k \, / \, M) \times 100 = a \times CTR_k + b \, ...... \, (1)$$

$$W = w_1 + w_2 + ...... + w_n \, ...... \, (2)$$

Incidentally, the above-mentioned a is an inclination obtained by approximating $M_k$ [%] with the linear function a $\times$ CTRk + b, which is stored in a not-shown memory of the load estimating means 17, together with the maximum load capability M determined by a tire size.

The maximum load capability ratio $M_k$ [%] is a value obtained by normalizing the load $w_k$ acting on the tire Tk with the maximum load capability M of the tire Tk.

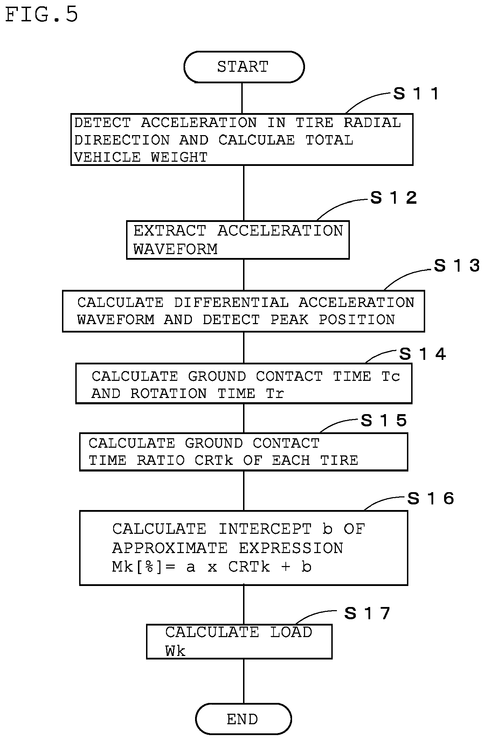

Next, the method for estimating, by using the tire load estimation device 10, the load acting on the tire 1 will be described with reference to the flowchart of FIG. 5.

First, detecting, by the respective acceleration sensors 101~112 mounted on the respective tires T1~T12 of the vehicle 1, the acceleration in the tire radial direction on the inner surface of the inner liner portion 2, which deforms along with deformation of the tire tread 3; calculating a total weight of the vehicle 1 by the total vehicle weight calculating means 12; and transmitting, from a transmitter 7 to the calculating unit 10B disposed on the vehicle body side, data of the detected acceleration in the tire radial direction and the calculated total weigh of the vehicle 1 (step S11).

Then, extracting, by the calculating unit 10B, acceleration waveforms from signals that are continuously outputted from the acceleration sensors 101~112 and that represent the magnitude of accelerations in the tire radial direction acting on the tire tread 3 (step S12).

Then, after time-differentiating the extracted acceleration waveform to obtain the differential acceleration waveform, detecting, from the differential acceleration waveform, the peak position on the leading edge $E_f$ side, the peak position on the trailing edge $E_k$ side, and the peak position on the trailing edge $E_k$ side after rotating the tire for one rotation (step S13).

Then, calculating the ground contact time $T_{ck}$ from the time interval between the peak position on the leading edge $E_f$ side and the peak position on the trailing edge $E_k$ side, and calculating the rotation time $T_{rk}$ from the time interval between two adjacent peak positions on the trailing edge $E_k$ side (step S14). Thereafter, calculating, for each tire Tk (k = 1~12), the ground contact time ratio $CTR_k = T_{ck} / T_{rk}$ which is the ratio between the ground contact time $T_{ck}$ and the rotation time $T_{rk}$ (step S15).

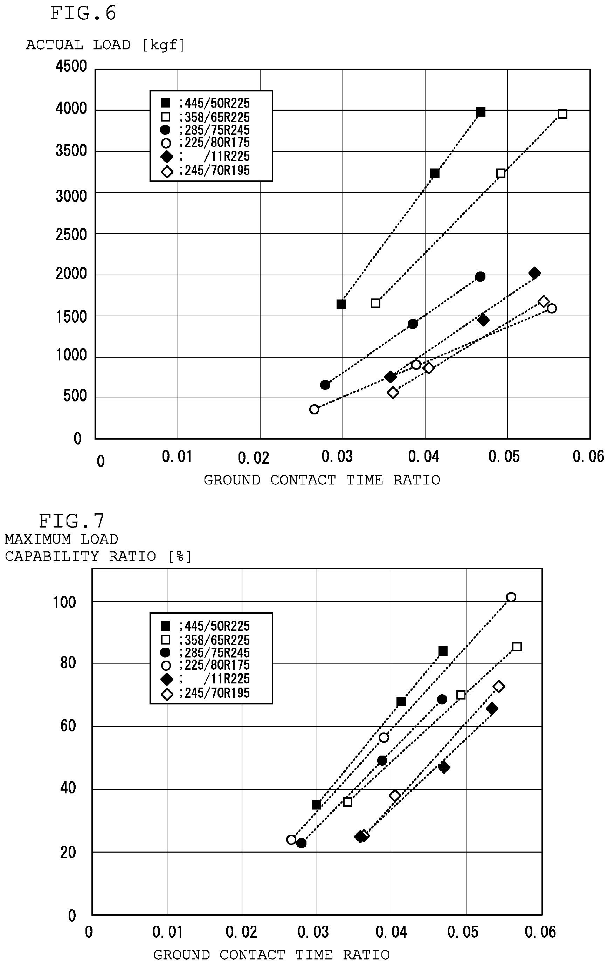

FIG. 6 illustrates a map representing a relationship between the load $w_k$ and the ground contact time ratio CTRk of various tire sizes. The sizes of the tires used include the rim diameter of 17.5 inches, 19.5 inches, 22.5 inches and 24.5 inches, and the flatness ratio of 90, 80, 75 70, 65 and 50.

As illustrated in FIG. 6, the ground contact time ratio CTRk and the load $w_k$ have a substantially linear relationship. In other words, the ground contact time ratio CTRk and the load $w_k$ can be expressed by the approximate expression expressed by the following formula (3).

$$w_k = m_k \times CTR_k + c_k \ ...... \ (3)$$

Accordingly, by creating in advance the map which can be expressed by the approximate expression (3) for each tire size, and from this map and the calculated ground contact time ratio $CTR_k$, the load $w_k$ of the tire Tk can be estimated.

However, to achieve this, it is necessary to create the map representing the relationship between the ground contact time ratio $CTR_K$ and the load $w_k$ for each tire size.

Therefore, instead of the load $w_k$, by using the maximum load capability ratio $M_k$ [%] = $(w_k / M_k) \times 100$ which is a value obtained by normalizing the load $w_k$ acting on the target tire Tk with the maximum load capability $M_k$ which is known tire information determined by the load index, the relationship between the ground contact time ratio CTR and the real load w illustrated in FIG. 6 is corrected to the relationship between the ground contact time ratio CTR and the maximum load capability ratio $M_k$ [%] as illustrated in FIG. 7.

As illustrated in FIG. 7, because the inclination a of the maximum load capacity ratio $M_k$ [%] with respect to the ground contact time ratio CTR is constant irrespective of the tire size, it is possible to convert the maximum load capacity ratio $M_k$ [%] into the approximate expression (expression of a linear function) shown in the below formula (1).

$$M_K \ [\%] = (W_K / M) \times 100 = a \times CTR_K + b \ ...... \ (1)$$

In the formula (1), the inclination a is a value that does not depend on the tire size, and the intercept b can be obtained, as described later, from the maximum load capacity M, the total vehicle weight W, the inclination a, and the ground contact time ratios $CTR_1$~$CTR_{12}$ calculated in step S15.

In step S16, the intercept b is obtained from the inclination a in the approximate expression indicating the relationship between the ground contact time ratio CTRk and the maximum load capacity ratio $M_k$ [%], the formula (1), and the below formula (2) indicating the relationship between the total sum of the loads $w_k$ and the total vehicle weight W.

$$W = w_1 + w_2 + ...... + w_n \ ...... \ (2)$$

Specifically, the formula (1) is modified as follows, and substituted for the formula (2).

$$W_K = / \ (M \ / \ 100) \ \cdot \ (a \times CTR_K + b) \ \ldots\ldots \ (1)'$$

Since the total number of tires T is, n = 12,

$$W = (M \ / \ 100) \ \cdot \ \{a \times (CTR_1 + CTR_2 + \ldots\ldots + CTR_{12}) + 12b\} \ \ldots\ldots \ (2)'$$

The maximum load capacity M and the inclination a are known, the total vehicle weight W is the value calculated by the total vehicle weight calculating means 12, and the ground contact time ratios $CTR_1 \sim CTR_{12}$ are the values calculated form the outputs of the acceleration sensors 101~112. Therefore, the intercept b can be obtained from the formula (2)'.

In step S17, returning back to the above formula (1), estimating the load $w_k$ acting on the tire Tk from the inclination a, the intercept b and the ground contact time ratio $CTR_k$ obtained in step S15.

Thus, without creating in advance the map representing the relationship between the ground contact time ratio CTRk and the load $w_k$, the load $w_k$ acting on the target tire Tk can be estimated.

Incidentally, the tire Tk, which is the target for estimation of the load $w_k$, may be only driven wheels (tires T1~T4), or may be only driving wheels (tires T5~T12). Further, only the load $w_k$ of a particular tire Tk may be estimated, or the load $w_k$ of all the tires Tk may be estimated.

Incidentally, in the above-described embodiment, the number of tires T was 12, however, it is needless to say that the present invention may be applied to a vehicle, the number of tires T thereof is four (4), as in the case of passenger cars.

In summary, it can also be described as follows. That is, the present invention provides a method for estimating a load acting on a tire mounted on a vehicle, the method including: a step of detecting an acceleration waveform in a tire radial direction of each tire from an output of each of acceleration sensors disposed on an inner surface side of a tire tread of each tire of the vehicle; a step of calculating a total vehicle weight; a step of differentiating the acceleration waveform in the tire radial direction of each tire to obtain a differential acceleration waveform; a step of calculating a ground contact time and a rotation time of the tire from the differential acceleration waveform; a step of calculating, for each tire, a ground contact time ratio which is a ratio between the ground contact time and the rotation time; and a step of estimating a load acting on a target tire, which is a target for estimation of the load, from the calculated ground contact time ratio of each tire, a maximum load capability of the target tire, the calculated total vehicle weight, and an inclination obtained in advance by approximating a maximum load capability ratio with a linear function of the ground contact time ratio, in which the maximum load capability ratio of the target tire is a value obtained by normalizing the load acting on the target tire with the maximum load capability of the target tire.

With the above-described configuration, the load acting on the tire can be estimated accurately with less sensors, and the load acting on the tire can be estimated without creating the map representing the relationship between the ground contact time ratio and the load.

In addition, in the step of estimating the load, because the load $w_k$ acting on the target tire Tk is obtained with the use of the following formulae (1) and (2), the load $w_k$ acting on the target tire Tk can be estimated accurately, where n is the total number of the tires, $M_k$ [%] is the maximum load capability ratio of the target tire Tk, CTRk is the ground contact time ratio of the tire Tk, and W is the total vehicle weight.

$$M_k \ [\%] = (w_k \ / \ M) \times 100 = a \times CTR_k + b \ \ldots\ldots \ (1)$$

$$W = w_1 + w_2 + \ldots\ldots + w_n \ \ldots\ldots \ (2)$$

M: the maximum load capability of the target tire Tk

Further, the present invention provides a device for estimating a load acting on a tire mounted on a vehicle, the device including: acceleration sensors each disposed on an inner surface side of a tire tread of each tire of the vehicle and each being configured to detect an acceleration in a tire radial direction of each tire; a total vehicle weight calculating means that calculates a total vehicle weight; an acceleration waveform extracting means that extracts, for each tire, an acceleration waveform in the tire radial direction including a vicinity of a contact patch from an output signal of each of the acceleration sensors; a differential calculating means that differentiates the acceleration waveform in the tire radial direction to obtain a differential acceleration waveform; a peak position detecting means that detects a peak position on a leading edge side and a peak position on a trailing edge side, the peak positions being peak positions at two ground contact ends appearing in the differential acceleration waveform; a ground contact time calculating means that calculates a ground contact time which is an interval between the peak position on the leading edge side and the peak position on the trailing edge side: a rotation time calculating means that calculates a rotation time, which is a time required for the tire to rotate for one rotation, from an interval between two adjacent peak positions on the leading edge side or two adjacent peak positions on the trailing edge side in the acceleration waveform in the tire radial direction; a ground contact time ratio calculating means that calculates, for each tire, a ground contact time ratio which is a ratio between the ground contact time and the rotation time; and a load estimating means that estimates the load acting on a target tire, which is a target for estimation of the load, from the calculated ground contact time ratio of each tire, a maximum load capability of the target tire, the calculated total vehicle weight, and an inclination obtained in advance by approximating a maximum load capability ratio with a linear function of the ground contact time ratio, in which the maximum load capability ratio of the target tire is a value obtained by normalizing the load acting on the target tire with the maximum load capability of the target tire.

By employing the configuration described above, it is possible to realize the tire load estimation device with a high precision.

REFERENCE SIGN LIST

1: tire, 2: inner liner portion, 3: tire tread, 4: center portion, 5: wheel rim, 6: tire air chamber, 7: transmitter, 10: tire load estimation device, 10A: sensor unit, 10B: calculating unit, 11: acceleration sensor, 12: total vehicle weight calculating means, 13: acceleration waveform extracting means, 14: differential acceleration waveform calculating means, 15: peak position calculating means, 16: ground contact time ratio calculating means, 16a: ground contact time calculating section, 16b: rotation time calculating section, 16c: ground contact time ratio calculating section, 17: load estimating means.

**Claims**

1. A method for estimating a load acting on a tire (T) mounted on a vehicle (1), the method comprising:

   a step (S 11) of detecting an acceleration waveform in a tire radial direction of each tire (T) from an output of each of acceleration sensors (101~112) disposed on an inner surface side of a tire tread of each tire (T) of the vehicle (1);
   a step (S11) of calculating a total vehicle weight;
   a step (S13) of differentiating the acceleration waveform in the tire radial direction of each tire (T) to obtain a differential acceleration waveform;
   a step (S14) of calculating a ground contact time (Tc) and a rotation time (Tr) of the tire (T) from the differential acceleration waveform;
   a step (S15) of calculating, for each tire (T), a ground contact time ratio (CTRk) which is a ratio between the ground contact time (Tc) and the rotation time (Tr); and
   a step (S17) of estimating a load (wk) acting on a target tire (Tk), which is a target for estimation of the load, from the calculated ground contact time ratio (CTRk) of each tire (T), a maximum load capability of the target tire (Tk), the calculated total vehicle weight, and an inclination obtained in advance by approximating a maximum load capability ratio (Mk [%]) with a linear function of the ground contact time ratio (CTRk),
   wherein the maximum load capability ratio (Mk [%]) of the target tire (Tk) is a value obtained by normalizing the load (wk) acting on the target tire (Tk) with the maximum load capability of the target tire (Tk).

2. The method for estimating a load acting on a tire (T) mounted on a vehicle (1) according to Claim 1, wherein, in the step (S17) of estimating the load (wk), the load $w_k$ acting on the target tire Tk is obtained from the following formulae (1) and (2) when a total number of the tires is n, the formula (1) representing a relationship between the maximum load capability ratio $M_k$ [%] of the target tire Tk and the ground contact time ratio CTRk of the target tire Tk, and the formula (2) representing a relationship between a total sum of the loads $w_k$ and the total vehicle weight W,

$$M_k\ [\%] = (w_k\ /\ M) \times 100 = a \times CTR_k + b \ ...... \ (1)$$

$$W = w_1 + w_2 + ...... + w_n \ ...... \ (2)$$

M: the maximum load capability of the target tire Tk.

3. A device (10) for estimating a load acting on a tire (T) mounted on a vehicle (1), the device (10) comprising:

acceleration sensors (101~112) each disposed on an inner surface side of a tire tread of each tire (T) of the vehicle (1) and each being configured to detect an acceleration in a tire radial direction of each tire (T);
a total vehicle weight calculating means (12) that calculates a total vehicle weight;
an acceleration waveform extracting means (13) that extracts, for each tire (T), an acceleration waveform in the tire radial direction including a vicinity of a contact patch from an output signal of each of the acceleration sensors (101~112):

a differential calculating means (14) that differentiates the acceleration waveform in the tire radial direction to obtain a differential acceleration waveform;
a peak position detecting means (15) that detects a peak position on a leading edge side and a peak position on a trailing edge side, the peak positions being peak positions at two ground contact ends appearing in the differential acceleration waveform;
a ground contact time calculating means (16a) that calculates a ground contact time (Tc) which is an interval between the peak position on the leading edge side and the peak position on the trailing edge side:

a rotation time calculating means (16b) that calculates a rotation time (Tr), which is a time required for the tire (T) to rotate for one rotation, from an interval between two adjacent peak positions on the leading edge side or two adjacent peak positions on the trailing edge side in the acceleration waveform in the tire radial direction;
a ground contact time ratio calculating means (16) that calculates, for each tire (T), a ground contact time ratio (CTRk) which is a ratio between the ground contact time (Tc) and the rotation time (Tr); and
a load estimating means (17) that estimates the load (wk) acting on a target tire (Tk), which is a target for estimation of the load, from the calculated ground contact time ratio (CTRk) of each tire (T), a maximum load capability of the target tire (Tk), the calculated total vehicle weight, and an inclination obtained in advance by approximating a maximum load capability ratio (Mk [%]) with a linear function of the ground contact time ratio (CTRk),
wherein the maximum load capability ratio (Mk [%]) of the target tire (Tk) is a value obtained by normalizing the load (wk) acting on the target tire (Tk) with the maximum load capability of the target tire (Tk).

**Patentansprüche**

1. Verfahren zum Schätzen einer Last, welche auf einem Reifen (T) wirkt, welcher auf einem Fahrzeug (1) montiert ist, wobei das Verfahren umfasst:

einen Schritt (S11) des Detektierens einer Beschleunigungswellenform in einer Reifenradialrichtung jedes Reifens (T) von einem Ausgang eines jeden von Beschleunigungssensoren (101~112), welche auf einer Innenflächenseite einer Reifenlauffläche jedes Reifens (T) des Fahrzeugs (1) angeordnet sind;
einen Schritt (S11) des Errechnens eines Gesamtfahrzeugsgewichts;
einen Schritt (S13) des Differenzierens der Beschleunigungswellenform in der Reifenradialrichtung jedes Reifens (T), um eine differentiale Beschleunigungswellenform zu erhalten;
einen Schritt (S14) des Errechnens einer Bodenkontaktzeit (Tc) und einer Rotationszeit (Tr) des Reifens (T) von der differentialen Beschleunigungswellenform;
einen Schritt (S15) des Errechnens, für jeden Reifen (T), eines Bodenkontaktszeitsverhältnisses (CTRk), welches ein Verhältnis zwischen der Bodenkontaktzeit (Tc) und der Rotationszeit (Tr) ist; und
einen Schritt (S17) des Schätzens einer Last (wk), welche auf einem Zielreifen (Tk) wirkt, welcher ein Ziel zur Schätzung der Last ist, aus dem errechneten Bodenkontaktszeitverhältnis (CTRk) jedes Reifens (T), einer maximalen Belastbarkeit des Zielreifens (Tk), dem errechneten Gesamtfahrzeuggewicht und einer Neigung, welche im Voraus durch Annäherung eines maximalen Belastbarkeitsverhältnisses (Mk[%]) mit einer linearen Funktion des Bodenkontaktzeitverhältnisses (CTRk) erhalten wird,
wobei das maximale Belastbarkeitsverhältnis (Mk[%]) des Zielreifens (Tk) ein Wert ist, welcher durch Normalisieren der Last (wk), welche auf dem Zielreifen (Tk) wirkt, mit der maximalen Belastbarkeit des Zielreifens (Tk) erhalten wird.

2. Verfahren zum Schätzen einer Last, welche auf einem Reifen (T) wirkt, welcher auf einem Fahrzeug (1) montiert ist, nach Anspruch 1, wobei, in dem Schritt (S17) des Schätzens der Last (wk), die Last $w_k$, welche auf dem Zielreifen Tk wirkt, von den folgenden Formeln (1) und (2) erhalten wird, wenn eine Gesamtzahl der Reifen n ist, wobei die Formel (1) eine Beziehung zwischen dem maximalen Belastbarkeitsverhältnis ($M_k$[%]) des Zielreifens Tk und dem Bodenkontaktzeitverhältnis CTRk des Zielreifens Tk darstellt und die Formel (2) eine Beziehung zwischen einer Gesamtsumme der Lasten $w_k$ und dem Gesamtfahrzeuggewicht W darstellt,

$$M_k\,[\%] = (w_k/M) \times 100 = a \times CTR_k + b \ldots\ldots (1)$$

$$W = w_1 + w_2 + \ldots\ldots + w_n \ldots\ldots (2)$$

M: maximale Belastbarkeit des Zielreifens Tk.

3. Vorrichtung (10) zum Schätzen einer Last, welche auf einem Reifen (T) wirkt, welcher auf einem Fahrzeug (1) montiert ist, wobei die Vorrichtung (10) umfasst:

Beschleunigungssensoren (101~112), welche jeweils auf einer Innenflächenseite einer Reifenlauffläche jedes Reifens (T) des Fahrzeugs (1) angeordnet sind und jeder konfiguriert ist, um eine Beschleunigung in einer Reifenradialrichtung jedes Reifens (T) zu detektieren;

ein Mittel (12) zum Errechnen eines Gesamtfahrzeugsgewichts, welches Mittel ein Gesamtfahrzeuggewicht errechnet;

ein Mittel (13) zum Extrahieren einer Beschleunigungswellenform, welches Mittel, für jeden Reifen (T), eine Beschleunigungswellenform in der Reifenradialrichtung extrahiert, einschließend eines Nahbereichs einer Kontaktfläche von einem Ausgangsignal von jedem der Beschleunigungssensoren (101~112);

ein Mittel (14) zum differentialen Errechnen, welches Mittel die Beschleunigungswellenform in der Reifenradialrichtung differenziert, um eine differentiale Beschleunigungswellenform zu erhalten;

ein Mittel (15) zum Detektieren einer Spitzenposition, welches Mittel eine Spitzenposition auf einer Vorderkantenseite und eine Spitzenposition auf einer Hinterkantenseite detektiert, wobei die Spitzenpositionen die Spitzenpositionen an zwei Bodenkontaktenden sind, welche in der differentialen Beschleunigungswellenform erscheinen;

ein Mittel (16a) zum Errechnen einer Bodenkontaktzeit, welches Mittel eine Bodenkontaktzeit (Tc) errechnet, welche ein Intervall zwischen der Spitzenposition auf der Vorderkantenseite und der Spitzenposition auf der Hinterkantenseite ist;

ein Mittel (16b) zum Errechnen einer Rotationszeit, welches Mittel eine Rotationszeit (Tr) errechnet, welche die Zeit ist, welche der Reifen (T) benötigt, um eine Rotation auszuführen, von einem Intervall zwischen zwei angrenzenden Spitzenpositionen auf der Vorderkantenseite oder zwei angrenzenden Spitzenpositionen auf der Hinterkantenseite in der Beschleunigungswellenform in der Reifenradialrichtung;

ein Mittel (16) zum Errechnen eines Bodenkontaktszeitverhältnisses, welches Mittel für jeden Reifen (T) ein Bodenkontaktzeitverhältnis (CTRk) errechnet, welches ein Verhältnis zwischen der Bodenkontaktzeit (Tc) und der Rotationszeit (Tr) ist; und

ein Mittel (17) zum Schätzen einer Last, welches Mittel die Last (wk) schätzt, welche auf einem Zielreifen (Tk) wirkt, welcher ein Ziel zum Schätzen der Last ist, von dem errechneten Bodenkontaktzeitverhältnis (CTRk) jedes Reifens (T), einer maximalen Belastbarkeit des Zielreifens (Tk), dem errechneten Gesamtfahrzeuggewicht und einer Neigung, welche im Voraus erhalten wird, indem ein maximales Belastbarkeitsverhältnis (Mk[%]) mit einer linearen Funktion des Bodenkontaktzeitverhältnisses (CTRk) angenähert wird,

wobei das maximale Belastbarkeitsverhältnis (Mk[%]) des Zielreifens (Tk) ein Wert ist, welcher durch Normalisieren der Last (wk), welche auf dem Zielreifen (Tk) wirkt, mit der maximalen Belastbarkeit des Zielreifens (Tk) erhalten wird.

## Revendications

1. Procédé d'estimation d'une charge agissant sur un pneu (T) monté sur un véhicule (1), le procédé comprenant :

une étape (S11) de détection d'une forme d'onde d'accélération dans une direction radiale de pneu de chaque pneu (T) à partir d'une sortie de chacun des capteurs d'accélération (101-112) disposés sur un côté de surface intérieure d'une bande de roulement de pneu de chaque pneu (T) du véhicule (1) ;

une étape (S11) de calcul d'un poids total du véhicule ;

une étape (S13) de différenciation de la forme d'onde d'accélération dans la direction radiale du pneu de chaque pneu (T) pour obtenir une forme d'onde d'accélération différentielle ;

une étape (S14) de calcul d'un temps de contact avec le sol (Tc) et d'un temps de rotation (Tr) du pneu (T) à partir de la forme d'onde d'accélération différentielle ;

une étape (S15) de calcul, pour chaque pneu (T), d'un rapport de temps de contact avec le sol (CTRk) qui est un rapport entre le temps de contact avec le sol (Tc) et le temps de rotation (Tr) ; et

une étape (S17) d'estimation d'une charge (wk) agissant sur un pneu cible (Tk), qui est une cible pour l'estimation de la charge, à partir du rapport de temps de contact avec le sol calculé (CTRk) de chaque pneu (T), d'une capacité de charge maximale pour le pneu cible (Tk), du poids total du véhicule calculé, et d'une tendance obtenue préalablement en rapprochant un rapport de capacité de charge maximale (Mk [%]) avec une fonction linéaire du rapport de temps de contact avec le sol (CTRk),

dans lequel le rapport de capacité de charge maximale (Mk [%]) du pneu cible (Tk) est une valeur obtenue en normalisant la charge (wk) agissant sur le pneu cible (Tk) avec la capacité de charge maximale du pneu cible (Tk).

2. Procédé d'estimation d'une charge agissant sur un pneu (T) monté sur un véhicule (1) selon la revendication 1, dans lequel, dans l'étape (S17) d'estimation de la charge (wk), la charge $w_k$ agissant sur le pneu cible Tk est obtenue à partir des formules suivantes (1) et (2), quand n est un nombre total des pneus, la formule (1) représentant une relation entre le rapport de capacité maximale de charge $M_k$ [%] du pneu cible Tk et le rapport de temps de contact avec le sol CTRk du pneu cible Tk, et la formule (2) représentant une relation entre une somme totale des charges $w_k$ et du poids total du véhicule W,

$$M_k \, [\%] = (w_k \, / \, M) \times 100 = a \times CTR_k + b \ldots\ldots (1)$$

$$W = w_1 + w_2 + \ldots\ldots = w_n \ldots\ldots (2)$$

M: capacité de charge maximale du pneu cible Tk.

3. Dispositif (10) pour estimer une charge agissant sur un pneu (T) monté sur un véhicule (1), le dispositif (10) comprenant :

des capteurs d'accélération (101~112) disposés chacun sur un côté de surface intérieure d'une bande de roulement de pneu de chaque pneu (T) du véhicule (1), et étant configurés chacun pour détecter une accélération dans une direction radiale de pneu de chaque pneu (T) ;

un moyen (12) de calcul d'un poids total du véhicule qui calcule un poids total du véhicule ;

un moyen (13) d'extraction de forme d'onde d'accélération qui extrait, pour chaque pneu (T), une forme d'onde d'accélération dans la direction radiale du pneu incluant des alentours d'une zone de contact à partir d'un signal de sortie de chacun des capteurs d'accélération (101~112) ;

un moyen (14) de calcul différentiel, qui différencie la forme d'onde d'accélération dans la direction radiale de pneu pour obtenir une forme d'onde d'accélération différentielle ;

un moyen (15) de détection de position de pic qui détecte une position de pic sur un côté de bord d'attaque et une position de pic sur un côté de bord arrière, les positions de pic étant des positions de pic à deux extrémités de contact avec le sol apparaissant dans la forme d'onde d'accélération différentielle ;

un moyen (16a) de calcul de temps de contact avec le sol qui calcule un temps de contact avec le sol (Tc) qui est un intervalle entre la position de pic sur le côté de bord d'attaque et la position de pic sur le côté de bord arrière ;

un moyen (16b) de calcul de temps de rotation qui calcule un temps de rotation (Tr), qui est un temps nécessaire pour que le pneu (T) effectue une rotation, à partir d'un intervalle entre deux positions de pic adjacentes sur le côté de bord d'attaque ou deux positions de pic adjacentes sur le côté de bord arrière dans la forme d'onde d'accélération dans la direction radiale du pneu ;

un moyen (16) de calcul de rapport de temps de contact avec le sol qui calcule, pour chaque pneu (T), un rapport de temps de contact avec le sol (CTRk) qui est un rapport entre le temps de contact avec le sol (Tc) et le temps de rotation (Tr) ; et

un moyen (17) d'estimation de charge qui estime la charge (wk) agissant sur un pneu cible (Tk), qui est une cible pour une estimation de la charge, à partir du rapport de temps de contact avec le sol calculé (CTRk) de chaque pneu (T), d'une capacité de charge maximale du pneu cible (Tk), du poids total du véhicule calculé, et d'une tendance obtenue préalablement en rapprochant un rapport de capacité maximale de charge (Mk [%]) avec une fonction linéaire du rapport de temps de contact avec le sol (CTRk),

dans lequel le rapport de capacité de charge maximale (Mk [%]) du pneu cible (Tk) est une valeur obtenue en normalisant la charge (wk) agissant sur le pneu cible (Tk) avec la capacité de charge maximale du pneu cible (Tk).

FIG.1

FIG.2(a)　　　　　FIG.2(b)

FIG.3(a)

FIG.3(b)

FIG.4

FIG.5

START

S 1 1
DETECT ACCELERATION IN TIRE RADIAL
DIREECTION AND CALCULAE TOTAL
VEHICLE WEIGHT

S 1 2
EXTRACT ACCELERATION
WAVEFORM

S 1 3
CALCULATE DIFFERENTIAL ACCELERATION
WAVEFORM AND DETECT PEAK POSITION

S 1 4
CALCULATE GROUND CONTACT TIME Tc
AND ROTATION TIME Tr

S 1 5
CALCULATE GROUND CONTACT
TIME RATIO CRTk OF EACH TIRE

S 1 6
CALCULATE INTERCEPT b OF
APPROXIMATE EXPRESSION
Mk[%]= a x CRTk + b

S 1 7
CALCULATE LOAD
Wk

END

## FIG.6

ACTUAL LOAD [kgf]

GROUND CONTACT TIME RATIO

## FIG.7

MAXIMUM LOAD
CAPABILITY RATIO [%]

GROUND CONTACT TIME RATIO

**EP 3 683 560 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2172759 A1
- JP 2015217713 A
- JP 2012218682 A